# EUROPEAN PATENT APPLICATION

(11) **EP 3 154 148 A1**
(43) Date of publication of application: **12.04.2017**
(21) Application number: 15189000.1
(22) Date of filing: 08.10.2015
(51) Int. Cl.: H02J 7/00

(54) **AN APPARATUS AND ASSOCIATED METHOD FOR SENSING A PHYSICAL STIMULUS**

(71) Applicant: Nokia Technologies Oy, 02610 Espoo (FI)
(72) Inventor: Allen, Mark, Cambridge, Cambridgeshire CB23 6BA (GB); Wei, Di, Cambridge, CB3 0FA (GB); Bessonov, Alexander, Cambridge, CB1 3HR (GB)
(74) Representative: Potter Clarkson LLP

(57) **Abstract**

An apparatus comprising a rechargeable power source coupled to a memristor via a resistive sensor, the rechargeable power source configured to apply a voltage to the memristor to switch the memristor from a first resistance state to a second resistance state when the resistive sensor is exposed to a physical stimulus, the apparatus further comprising an optical indicator configured to provide an optical indication of the resistance state of the memristor and thus one or more of the presence and magnitude of the physical stimulus, and a voltage enabler configured to enable application of a voltage to the optical indicator to enable said optical indication when sensor readout is required, wherein the apparatus is configured such that the voltage applied to the optical indicator also allows recharging of the rechargeable power source.

## Description

### Technical Field

The present disclosure relates to sensors, associated methods and apparatus. Certain embodiments specifically concern an apparatus comprising a rechargeable power source coupled to a memristor via a resistive sensor, the rechargeable power source configured to apply a voltage to the memristor to switch the memristor from a first resistance state to a second resistance state when the resistive sensor is exposed to a physical stimulus. In these embodiments, the apparatus further comprises an optical indicator configured to provide an optical indication of the resistance state of the memristor and thus the presence and/or magnitude of the physical stimulus, and a voltage enabler configured to enable application of a voltage to the optical indicator which can also be used to recharge the rechargeable power source.

Some embodiments may relate to portable electronic devices, in particular, so-called hand-portable electronic devices which may be hand-held in use (although they may be placed in a cradle in use). Such hand-portable electronic devices include so-called Personal Digital Assistants (PDAs) and tablet PCs. The portable electronic devices according to one or more embodiments may provide one or more audio/text/video communication functions (e.g. tele-communication, video-communication, and/or text transmission, Short Message Service (SMS)/ Multimedia Message Service (MMS)/emailing functions, interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture function (e.g. using a (e.g. in-built) digital camera), and gaming functions.

### Background

Research is currently being done to develop sensors having increased sensitivity and functionality at lower cost and with lower power consumption than existing sensors.

The listing or discussion of a prior-published document or any background in this specification should not necessarily be taken as an acknowledgement that the document or background is part of the state of the art or is common general knowledge.

### Summary

According to a first aspect, there is provided an apparatus comprising a rechargeable power source coupled to a memristor via a resistive sensor, the rechargeable power source configured to apply a voltage to the memristor to switch the memristor from a first resistance state to a second resistance state when the resistive sensor is exposed to a physical stimulus, the apparatus further comprising an optical indicator configured to provide an optical indication of the resistance state of the memristor and thus one or more of the presence and magnitude of the physical stimulus, and a voltage enabler configured to enable application of a voltage to the optical indicator to enable said optical indication when sensor readout is required, wherein the apparatus is configured such that the voltage applied to the optical indicator also allows recharging of the rechargeable power source.

In this way, the apparatus may be arranged such that the rechargeable power source is recharged one or more of during and after sensor readout.

The voltage enabler may comprise a DC power source connected to the optical indicator via a switch.

The voltage enabler may comprise a coil configured to provide an AC voltage induced by a wireless reader, and a rectifying diode configured to rectify the AC voltage and prevent the coil from shorting the rechargeable power source.

The apparatus may comprise a plurality of rectifying diodes arranged to provide full-wave rectification of the AC voltage.

The apparatus may comprise a smoothing capacitor connected in parallel with the memristor and optical indicator to help stabilise the rectified voltage.

The apparatus may comprise a charging diode configured such that the voltage applied to the optical indicator (i.e. the voltage applied using the voltage enabler) allows recharging of the rechargeable power source regardless of the resistance of the resistive sensor.

The apparatus may comprise a plurality of memristors coupled in parallel to the rechargeable power source via the resistive sensor, each memristor configured to switch from the first resistance state to the second resistance state at a different applied voltage and having a respective optical indicator connected in series thereto to provide an optical indication of the resistance state of the associated memristor.

One or more of the memristor materials, dimensions and fabrication conditions may be configured to define the respective applied voltages at which the memristors switch from the first resistance state to the second resistance state.

Each memristor may be connected in series to a respective resistor, the respective resistors having different resistance values to define the applied voltages at which the associated memristors switch from the first resistance state to the second resistance state.

One or more of the resistor(s) and optical indicator(s) may have a resistance value somewhere between that of the first and second resistance states of the associated memristor to prevent the memristor from shorting the rechargeable power source in the second resistance state.

The resistive sensor may be configured to exhibit a decrease in resistance on exposure to the physical stimulus, the decrease in resistance allowing the voltage from the rechargeable power source to be applied to the memristor(s).

The resistive sensor may be configured to detect one or more of the following physical stimuli: humidity, electromagnetic radiation, a chemical species, a biological species, strain, temperature and pressure.

The resistive sensor may be a humidity sensor comprising graphene oxide having one or more functional groups attached thereto, the one or more functional groups configured to react with water in the surrounding environment to generate protons and produce a resulting decrease in resistance.

The resistive sensor may be an electromagnetic radiation sensor comprising a quantum dot material configured to generate electron-hole pairs on exposure to incident electromagnetic radiation and produce a resulting decrease in resistance.

The optical indicator(s) may be light-emitting diodes, organic light-emitting diodes, light-emitting electrochemical cells or electrochromic cells.

One or more of the rechargeable and DC power sources may be batteries, supercapacitors or battery-capacitor hybrids.

The memristor(s) may be configured to have a resistance of around 10⁶-10⁸Ω (e.g. 1-100MΩ) in the first resistance state and a resistance of around 10²Ω (e.g. 100-500Ω) in the second resistance state.

The memristor(s) may be configured to switch from the first resistance state to the second resistance state when a voltage of between 0.1V and 5V is applied thereto.

The memristor(s) may be configured to switch back from the second resistance state to the first resistance state when a reverse voltage above a predefined threshold is applied thereto.

The memristor(s) may comprise a layer of transition metal oxide in contact with a layer of transition metal chalcogenide and positioned between metal electrodes. A variety of other memristive materials from the group of metal oxides, metal chalcogenides, metal halides and organic polymers may be used instead.

The apparatus may be one or more of an electronic device, a portable electronic device, a portable telecommunications device, a mobile phone, a personal digital assistant, a tablet, a phablet, a desktop computer, a laptop computer, a server, a smartphone, a smartwatch, smart eyewear, a sensor, and a module for one or more of the same.

According to a further aspect, there is provided a system comprising the apparatus described herein and a wireless reader.

According to a further aspect, there is provided a method of sensing a physical stimulus using an apparatus,
the apparatus comprising a rechargeable power source coupled to a memristor via a resistive sensor, the rechargeable power source configured to apply a voltage to the memristor to switch the memristor from a first resistance state to a second resistance state when the resistive sensor is exposed to a physical stimulus, the apparatus further comprising an optical indicator configured to provide an optical indication of the resistance state of the memristor and thus one or more of the presence and magnitude of the physical stimulus, and a voltage enabler configured to enable application of a voltage to the optical indicator to enable said optical indication when sensor readout is required, wherein the apparatus is configured such that the voltage applied to the optical indicator also allows recharging of the rechargeable power source,
the method comprising using the voltage enabler to enable the application of a voltage to the optical indicator to both determine one or more of the presence and magnitude of the physical stimulus based on the resulting optical indication, and recharge the rechargeable power source.

The steps of any method disclosed herein do not have to be performed in the exact order disclosed, unless explicitly stated or understood by the skilled person.

Corresponding computer programs for implementing one or more steps of the methods disclosed herein are also within the present disclosure and are encompassed by one or more of the described example embodiments.

One or more of the computer programs may, when run on a computer, cause the computer to configure any apparatus, including a battery, circuit, controller, or device disclosed herein or perform any method disclosed herein. One or more of the computer programs may be software implementations, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

One or more of the computer programs may be provided on a computer readable medium, which may be a physical computer readable medium such as a disc or a memory device, or may be embodied as a transient signal. Such a transient signal may be a network download, including an internet download.

The present disclosure includes one or more corresponding aspects, example embodiments or features in isolation or in various combinations whether or not specifically stated (including claimed) in that combination or in isolation. Corresponding means for performing one or more of the discussed functions are also within the present disclosure.

The above summary is intended to be merely exemplary and non-limiting.

### Brief Description of the Figures

A description is now given, by way of example only, with reference to the accompanying drawings, in which:-
Figure 1 shows one example of the present apparatus in which the voltage enabler comprises a DC power source;
Figure 2 shows another example of the present apparatus in which the voltage enabler comprises a coil and a rectifying diode;
Figure 3 shows another example of the present apparatus comprising a plurality of rectifying diodes;
Figure 4 shows another example of the present apparatus in which the apparatus forms at least part of an electronic device;
Figure 5 shows the main steps of a method of using the present apparatus; and
Figure 6 shows a computer-readable medium comprising a computer program configured to perform, control or enable the method of Figure 5.

### Description of Specific Aspects/Embodiments

Low cost sensors (especially environmental sensors) are generally considered to be commercially unfeasible unless they can be manufactured using high throughput manufacturing methods such as printing. This problem is exacerbated when the sensors are required to store the sensor data locally because such data storage is traditionally realised using silicon-based microchips which cannot be printed. Furthermore, some sensors are expected to be operational for relatively long periods of time between battery replacements/charges, which requires the use of energy-efficient components. The volatile storage media used in many existing sensors are not particularly energy-efficient, however.

There will now be described an apparatus and associated methods that may provide a solution to one or more of these issues.

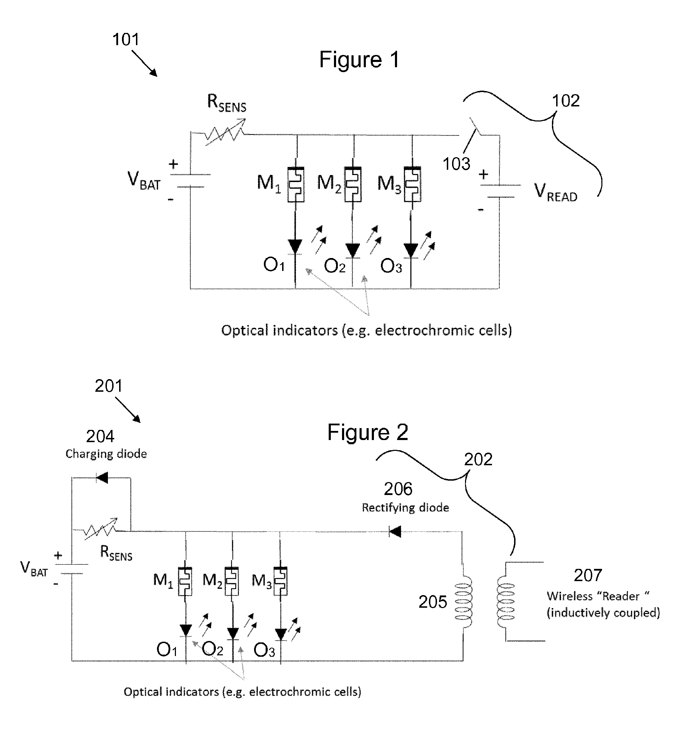

Figure 1 illustrates one example of the present apparatus 101. The apparatus 101 comprises a rechargeable power source V_{BAT} (e.g. battery, supercapacitor or battery-capacitor hybrid) coupled to one or more memristors M₁₋₃ via a resistive sensor R_{SENS}. The rechargeable power source V_{BAT} is configured to apply a voltage to the one or more memristors M₁₋₃ to switch the memristor(s) M₁₋₃ from a first (e.g. higher) resistance state to a second (e.g. lower) resistance state when the resistive sensor R_{SENS} is exposed to a physical stimulus. In addition, the apparatus 101 comprises one or more optical indicators O₁₋₃ (e.g. light-emitting diodes or electrochromic cells) configured to provide an optical indication of the resistance state of the respective memristor(s) M₁₋₃, and a voltage enabler 102 configured to enable application of a voltage to the optical indicator(s) O₁₋₃ to enable said optical indication when sensor readout is required.

In this example, the apparatus 101 comprises a plurality of memristors M₁₋₃ coupled in parallel to the rechargeable power source V_{BAT} via the resistive sensor R_{SENS}. Furthermore, each memristor M₁₋₃ is configured to switch from the first resistance state to the second resistance state at a different applied voltage (threshold voltage), and has a respective optical indicator O₁₋₃ connected in series thereto to provide an optical indication of the resistance state of the associated memristor M₁₋₃.

When a voltage is applied to the optical indicators O₁₋₃, only those for which the associated memristors M₁₋₃ are in the lower resistance state will illuminate. Since the memristors M₁₋₃ can only be switched from one resistance state to another when the resistive sensor R_{SENS} is exposed to the physical stimulus, the optical indication of the resistance state therefore provides an indication of the presence of the physical stimulus. In addition, if the voltage applied from the rechargeable power source V_{BAT} to the memristors M₁₋₃ is pre-calibrated, then it is also possible to quantify the physical stimulus based on the threshold voltages of the memristors M₁₋₃. The voltage applied to the optical indicators O₁₋₃ (i.e. the readout voltage) should be large enough to enable operation of the optical indicators O₁₋₃, but small enough to have a negligible impact on the resistance of the memristors M₁₋₃.

Although a plurality of memristors M₁₋₃ are shown in Figure 1, some examples of the present apparatus 101 may only comprise a single memristor M₁. In this scenario, however, the only quantitative information that can be obtained if the memristor M₁ has switched is that the physical stimulus must have exceeded the predetermined level corresponding to the threshold voltage. The use of multiple memristors M₁₋₃ with different threshold voltages, on the other hand, can provide a plurality of different reference points for assessing the magnitude of the physical stimulus. In this way, if the memristors M₁₋₃ are configured to have incremental switching thresholds and one (first) memristor M₁ has switched but the next (second) one M₂ has not, then it may be concluded that the physical stimulus exceeded the level corresponding to the threshold voltage of the first memristor M₁ but did not exceed the level corresponding to the threshold voltage of the second memristor M₂ (i.e. the magnitude of the physical stimulus fell somewhere between these two predetermined levels). Furthermore, if the apparatus 101 comprises a relatively large number of memristors M₁₋₃ (e.g. 10, 25, 50, 75 or 100 memristors) with relatively small threshold increments therebetween (e.g. 0.05, 0.1, 0.2, 0.5 or 1 V), then the magnitude of the physical stimulus can be determined with a reasonably high accuracy.

The respective applied (threshold) voltages at which the memristors M₁₋₃ switch from the first resistance state to the second resistance state may be defined by one or more of the memristor materials, dimensions and fabrication conditions. For example, the memristors M₁₋₃ may be formed from one or more solution-processable materials such as two-dimensional materials (e.g. graphene), transition metal oxides and transition metal chalcogenides. In some cases, the memristors M₁₋₃ may comprise a layer of transition metal oxide in contact with a layer of transition metal chalcogenide and positioned between metal electrodes to form a stack (such as Ag/MoOₓ/MoS₂/Ag). Memristors M₁₋₃ formed from such materials can be made to switch between a first resistance state of around 10⁶-10⁸Ω (e.g. 1-100MΩ) and a second resistance state of around 10²Ω (e.g. 100-500Ω) using threshold voltages in the range of 0.1V to 5V.

Additionally or alternatively, each memristor M₁₋₃ may be connected in series to a respective resistor (not shown) having a different resistance value to define the applied (threshold) voltage of the associated memristor M₁₋₃. In this scenario, each resistor may have a resistance value somewhere between that of the first and second resistance states of the associated memristor M₁₋₃ to prevent the memristor M₁₋₃ from shorting the rechargeable power source V_{BAT} in the lower resistance state (although in some cases, the resistance of the optical indicators O₁₋₃ may be sufficient to address this issue). The memristors M₁₋₃ may also be configured to switch back from the second resistance state to the first resistance state when a reverse voltage above a predefined threshold is applied thereto. This feature allows the apparatus 101 to be reset after the sensor data has been read out, and may be implemented using the voltage enabler 102.

Memristors M₁₋₃ typically retain their current resistance state until a voltage is applied to change it. As a result, the information on the presence and/or magnitude of the physical stimulus can be stored in the memristors M₁₋₃ without the consumption of any additional power (i.e. the memristors M₁₋₃ can be used as non-volatile storage cells). Furthermore, the power supply V_{BAT}, resistive sensor R_{SENS}, memristors M₁₋₃ and optical indicators O₁₋₃ can be formed using printable materials. These factors enable energy-efficient sensors with on-board memory to be fabricated at relatively low cost.

The present apparatus 101 is also configured such that the voltage applied to the optical indicators O₁₋₃ allows recharging of the rechargeable power source V_{BAT}. This feature may further help to address the power consumption issue associated with sensor devices. In the example shown in Figure 1, the voltage enabler 102 comprises a DC power source V_{READ} (e.g. battery, supercapacitor or battery-capacitor hybrid) connected to the optical indicators O₁₋₃ and associated memristors M₁₋₃ via a switch 103. With this particular configuration, the rechargeable power source V_{BAT} is simultaneously recharged whilst the switch 103 is closed for sensor readout. In other examples, however, the apparatus 101 may comprise an intermediate component (not shown) which delays recharging of the rechargeable power source V_{BAT} (i.e. the rechargeable power source V_{BAT} is recharged after sensor readout rather than during sensor readout). For instance, the rechargeable power source V_{BAT} may be a battery, and the DC power source V_{READ} may be configured to recharge the battery indirectly via a supercapacitor.

The resistive sensor R_{SENS} is configured to exhibit a decrease in resistance on exposure to the physical stimulus. This decrease in resistance allows the voltage from the rechargeable power source V_{BAT} to be applied to the memristors M₁₋₃ to switch them from the first resistance state to the second resistance state. In this way, the voltage applied to the memristors M₁₋₃ increases with the magnitude of the physical stimulus. The resistive sensor R_{SENS} may be configured to detect (but is not limited to) one or more of the following stimuli: humidity, electromagnetic radiation, a chemical species, a biological species, strain, temperature and pressure. For example, the resistive sensor R_{SENS} may be a humidity sensor comprising graphene oxide having one or more functional groups attached thereto, the one or more functional groups configured to react with water in the surrounding environment to generate protons and produce a resulting decrease in resistance. As another example, the resistive sensor R_{SENS} may be an electromagnetic radiation sensor comprising a quantum dot material configured to generate electron-hole pairs on exposure to incident electromagnetic radiation and produce a resulting decrease in resistance.

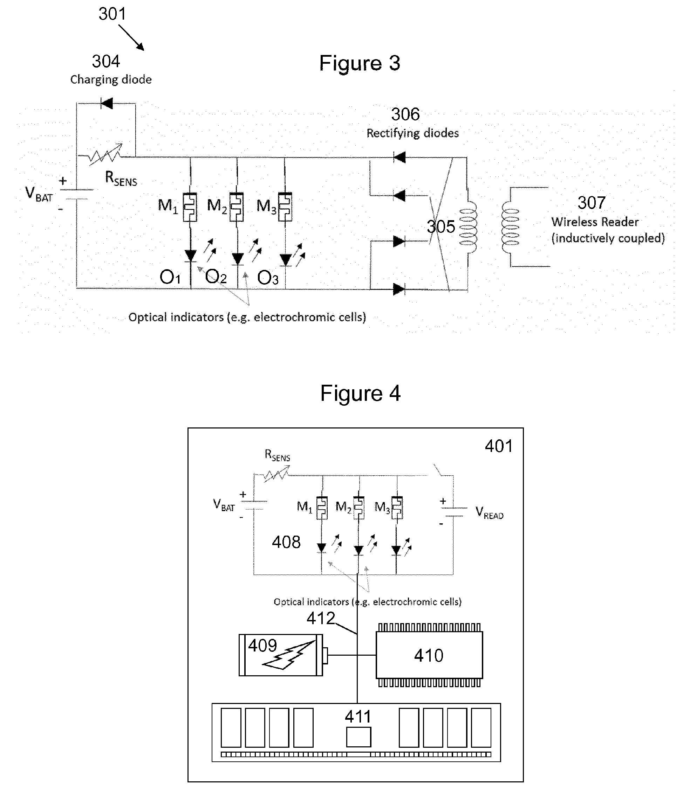

The voltage applied from the DC power source V_{READ} to the rechargeable power source V_{BAT} in Figure 1 is dependent upon the resistance of the resistive sensor R_{SENS}: the lower the resistance of the resistive sensor R_{SENS}, the greater the applied voltage. The apparatus 101 may, however, comprise a charging diode (shown in Figures 2 and 3 but not limited thereto) configured such that the voltage applied to the optical indicators O₁₋₃ allows recharging of the rechargeable power source V_{BAT} regardless of the resistance of the resistive sensor R_{SENS}.

Figure 2 shows another example of the present apparatus 201. In this example, the voltage enabler 202 comprises a coil 205 and a rectifying diode 206. When sensor readout is required, a wireless reader 207 is brought into inductive coupling proximity of the coil 205 and applies a read signal to induce an AC voltage in the coil 205. The induced AC voltage is then rectified by the rectifying diode 206 to provide a (approximate) DC voltage across the memristors M₁₋₃ and optical indicators O₁₋₃ to illuminate those optical indicators O₁₋₃ associated with the memristors M₁₋₃ that are in the lower resistance state. The rectifying diode 206 also acts to prevent the coil 205 from shorting the rechargeable power source V_{BAT} when the coil 205 is not being used for sensor readout.

Figure 3 shows another example of the present apparatus 301. This example is identical to that shown in Figure 2 except that the apparatus 301 comprises a plurality of rectifying diodes 306 arranged to provide full-wave rectification of the AC voltage. A full-wave rectifier converts both polarities of the input waveform to one of constant polarity (positive or negative) at its output and therefore yields a higher average output voltage than a half-wave rectifier. Due to the alternating nature of the input AC signal, however, the process of rectification necessarily produces a DC output that, though unidirectional, consists of pulses of current. In some cases, the optical indicators O₁₋₃ may require a constant DC current rather than a pulsed current. To address this issue, the apparatus 301 may further comprise a smoothing capacitor (not shown) connected in parallel with the memristors M₁₋₃ and optical indicators O₁₋₃ to help stabilise the rectified voltage.

Figure 4 shows another example of the present apparatus 401. In this example, the apparatus 401 is one or more of an electronic device, a portable electronic device, a portable telecommunications device, a mobile phone, a personal digital assistant, a tablet, a phablet, a desktop computer, a laptop computer, a server, a smartphone, a smartwatch, smart eyewear, a sensor, a humidity sensor, and a module for one or more of the same.

As shown in the figure, the apparatus 401 comprises the various components described previously (denoted by reference numeral 408), a power source 409, a processor 410 and a storage medium 411, which are electrically connected to one another by a data bus 412.

The power source 409 is configured to provide the various components of the apparatus 401 with electrical power to enable their operation. The power source 409 may be the rechargeable power source, the DC power source or a separate power source in addition to the rechargeable and DC power sources.

The processor 410 is configured for general operation of the apparatus 401 by providing signalling to, and receiving signalling from, the other components to manage their operation. The storage medium 411 is configured to store computer code configured to perform, control or enable operation of the apparatus 401. The storage medium 411 may also be configured to store settings for the other components. The processor 410 may access the storage medium 411 to retrieve the component settings in order to manage the operation of the other components.

The processor 410 may be a microprocessor, including an Application Specific Integrated Circuit (ASIC). The storage medium 411 may be a temporary storage medium such as a volatile random access memory. On the other hand, the storage medium 411 may be a permanent storage medium 411 such as a hard disk drive, a flash memory, or a non-volatile random access memory. The power source 409 may comprise one or more of a primary battery, a secondary battery, a capacitor, a supercapacitor and a battery-capacitor hybrid.

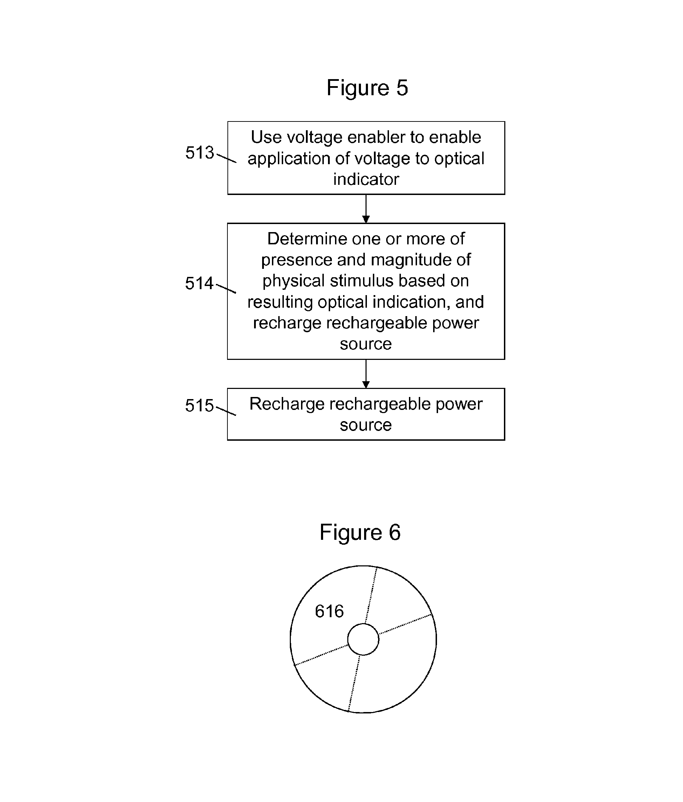

Figure 5 shows the main steps 513-515 of a method of sensing a physical stimulus using the present apparatus. The method comprises: using the voltage enabler to enable the application of a voltage to the optical indicator(s) 513; determining one or more of the presence and magnitude of the physical stimulus based on the resulting optical indication 514; and recharging the rechargeable power source using the applied voltage 515.

Figure 6 illustrates schematically a computer/processor readable medium 616 providing a computer program according to one embodiment. The computer program may comprise computer code configured to perform, control or enable one or more of the method steps 513-515 of Figure 5. In this example, the computer/processor readable medium 616 is a disc such as a digital versatile disc (DVD) or a compact disc (CD). In other embodiments, the computer/processor readable medium 616 may be any medium that has been programmed in such a way as to carry out an inventive function. The computer/processor readable medium 616 may be a removable memory device such as a memory stick or memory card (SD, mini SD, micro SD or nano SD card).

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some embodiments, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "computer" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

It will be appreciated that the term "signalling" may refer to one or more signals transmitted as a series of transmitted and/or received signals. The series of signals may comprise one, two, three, four or even more individual signal components or distinct signals to make up said signalling. Some or all of these individual signals may be transmitted/received simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/embodiments may consist of any such individual feature or combination of features. In view of the foregoing description it will be evident to a person skilled in the art that various modifications may be made within the scope of the disclosure.

While there have been shown and described and pointed out fundamental novel features as applied to different embodiments thereof, it will be understood that various omissions and substitutions and changes in the form and details of the devices and methods described may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment may be incorporated in any other disclosed or described or suggested form or embodiment as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising a rechargeable power source coupled to a memristor via a resistive sensor, the rechargeable power source configured to apply a voltage to the memristor to switch the memristor from a first resistance state to a second resistance state when the resistive sensor is exposed to a physical stimulus, the apparatus further comprising an optical indicator configured to provide an optical indication of the resistance state of the memristor and thus one or more of the presence and magnitude of the physical stimulus, and a voltage enabler configured to enable application of a voltage to the optical indicator to enable said optical indication when sensor readout is required, wherein the apparatus is configured such that the voltage applied to the optical indicator also allows recharging of the rechargeable power source.

2. The apparatus of claim 1, wherein the apparatus is arranged such that the rechargeable power source is recharged during sensor readout.

3. The apparatus of claim 1 or 2, wherein the voltage enabler comprises a DC power source connected to the optical indicator via a switch.

4. The apparatus of claim 1 or 2, wherein the voltage enabler comprises a coil configured to provide an AC voltage induced by a wireless reader, and a rectifying diode configured to rectify the AC voltage and prevent the coil from shorting the rechargeable power source.

5. The apparatus of claim 4, wherein the apparatus comprises a plurality of rectifying diodes arranged to provide full-wave rectification of the AC voltage.

6. The apparatus of claim 4 or 5, wherein the apparatus comprises a smoothing capacitor connected in parallel with the memristor and optical indicator to help stabilise the rectified voltage.

7. The apparatus of any preceding claim, wherein the apparatus comprises a charging diode configured such that the voltage applied to the optical indicator allows recharging of the rechargeable power source regardless of the resistance of the resistive sensor.

8. The apparatus of any preceding claim, wherein the apparatus comprises a plurality of memristors coupled in parallel to the rechargeable power source via the resistive sensor, each memristor configured to switch from the first resistance state to the second resistance state at a different applied voltage and having a respective optical indicator connected in series thereto to provide an optical indication of the resistance state of the associated memristor.

9. The apparatus of claim 8, wherein one or more of the memristor materials, dimensions and fabrication conditions are configured to define the respective applied voltages at which the memristors switch from the first resistance state to the second resistance state.

10. The apparatus of claim 8, wherein each memristor is connected in series to a respective resistor, the respective resistors having different resistance values to define the applied voltages at which the associated memristors switch from the first resistance state to the second resistance state.

11. The apparatus of any of claims 8 to 10, wherein one or more of the resistor(s) and optical indicator(s) have a resistance value somewhere between that of the first and second resistance states of the associated memristor to prevent the memristor from shorting the rechargeable power source in the second resistance state.

12. The apparatus of any preceding claim, wherein the resistive sensor is a humidity sensor comprising graphene oxide having one or more functional groups attached thereto, the one or more functional groups configured to react with water in the surrounding environment to generate protons and produce a resulting decrease in resistance.

13. The apparatus of any of claims 1 to 11, wherein the resistive sensor is an electromagnetic radiation sensor comprising a quantum dot material configured to generate electron-hole pairs on exposure to incident electromagnetic radiation and produce a resulting decrease in resistance.

14. A method of sensing a physical stimulus using an apparatus,
the apparatus comprising a rechargeable power source coupled to a memristor via a resistive sensor, the rechargeable power source configured to apply a voltage to the memristor to switch the memristor from a first resistance state to a second resistance state when the resistive sensor is exposed to a physical stimulus, the apparatus further comprising an optical indicator configured to provide an optical indication of the resistance state of the memristor and thus one or more of the presence and magnitude of the physical stimulus, and a voltage enabler configured to enable application of a voltage to the optical indicator to enable said optical indication when sensor readout is required, wherein the apparatus is configured such that the voltage applied to the optical indicator also allows recharging of the rechargeable power source,
the method comprising using the voltage enabler to enable the application of a voltage to the optical indicator to both determine one or more of the presence and magnitude of the physical stimulus based on the resulting optical indication, and recharge the rechargeable power source.

15. A computer program comprising computer code configured to perform the method of claim 14.
